# EUROPÄISCHE PATENTSCHRIFT

(11) **EP 0 399 410 B1**
(45) Veröffentlichungstag und Bekanntmachung des Hinweises auf die Patenterteilung: **13.09.1995**
(21) Anmeldenummer: 90109525.7
(22) Anmeldetag: 19.05.1990
(51) Int. Cl.: B42D 15/02

(54) **Verfahren zum Aufbringen und Versiegeln von Informationen auf kartenförmigen Informationsträgern und danach hergestellte Karte**
Method of applying and sealing of information on an information carrier in the form of a card and the card itself
Méthode pour l'application et le scellement de renseignements sur un support d'informations en forme de carte et la carte elle-même

(30) Priorität: 23.05.1989 DE 3916708
(43) Veröffentlichungstag der Anmeldung: 28.11.1990
(60) Teilanmeldung: 95102813.3
(73) Patentinhaber: Vogt, Werner, CH-5453 Remetschwil (CH)
(72) Erfinder: Vogt, Werner, CH-5453 Remetschwil (CH)
(74) Vertreter: Otte, Peter, Dipl.-Ing.

(56) Entgegenhaltungen:
- EP-A- 0 195 104
- EP-A- 0 232 709
- GB-A- 2 118 898

## Beschreibung

### Stand der Technik

Die Erfindung betrifft ein Verfahren zum Aufbringen und Versiegeln von Daten, Informationen, Bildern u. dgl. auf kartenförmigen Informationsträgern, insbesondere Kreditkarten u. dgl. nach dem Oberbegriff des Anspruches 1 und eine danach hergestellte Karte nach dem Oberbegriff des Anspruches 14.

Bei einem bekannten Verfahren zur Herstellung hochfälschungssicherer Identifikationskarten (US-A-4 687 526 oder auch dem entsprechenden europäischen Pendant EP 0 232 709 A1) wird mit Hilfe einer Videokamera ein fotografisches Abbild gewonnen und zusammen mit zusätzlichen digitalen Daten so verarbeitet, daß sich auf einem Bildschirm eine Darstellung der gewünschten Kartenbeschriftung mit Abbildung ergibt. Die gesamte Darstellung gelangt anschließend zu einem Laserdrucker, der das Portrait und sonstige gewünschte alphanumerische Informationen auf einem Papierblatt ausdruckt. Anschließend wird das Papierblatt dann laminiert, indem es zwischen zwei Schichten eines transparenten thermoplastischen Materials gelegt und unter Einwirkung von Wärme und Druck mit einer solchen Temperatur und einem solchen Druck verarbeitet wird, daß das Kunststoffmaterial in die Zwischenräume zwischen die Papierfasern eindringt, so daß sich eine einheitliche Struktur ergibt, die nicht mehr ohne Zerstörung der Identifikationsdaten getrennt werden kann.

Dieses bekannte Verfahren resultiert aus den Schwierigkeiten, die sich bei dem Versuch ergeben, insbesondere fotografische Abbilder bei einer Identifikationskarte so zu integrieren, daß sich eine nachträgliche Fälschung oder ein Auftrennen der Laminatschichten als unmöglich erweist. So ist es bei der Herstellung kartenförmiger Ausweise, beispielsweise in der Form von Scheckkarten, bekannt, diese aus einem Vollkunststofflaminat aufzubauen, wobei die einzelnen Schichten oder Laminate, die überwiegend aus PVC oder gegebenenfalls auch aus einem anderen geeigneten Kunststoffmaterial bestehen können, übereinander gestapelt werden einschließlich eines dazwischen gelegten Abbilds des zukünftigen Trägers und durch Druck und Wärmeeinwirkung verbunden werden. Dies führt jedoch, wie auch bei dem bekannten eingangs genannten Verfahren zu erwarten ist, lediglich zu einer Randkantenversiegelung, da bei einer zwischen Kunststoffschichten eingelegten Papierschicht entweder, wenn die beidseitig der Papierschicht angeordneten Kunststoffschichten sich nicht nach dem Laminieren oder Verschweißen berühren, ein Trennen innerhalb der Papierschicht möglich ist oder dann, wenn die Kunststoffschichten die Papierschicht vollständig durchdringen, also nicht nur Faserzwischenräume besetzen, ein Zerstören der Papierschicht einschließlich der von dieser getragenen Daten zu erwarten ist. Daher hat sich das Anbringen von Informationen, auch allein als Beschriftung oder zusammen mit Bildern, Magnetstreifen oder sonstigen, gegebenenfalls auch nur maschinenlesbaren Codierungen (Infrarot-Helldunkel-Maskierung) bei solchen Karten stets im gewissen Maße als problematisch erwiesen.

Ferner ist es bekannt (US-A-4,132,350), eine magnetische Karte aus verschiedenen Laminatschichten, Datenschichten oder einer transparenten Kunststoffschicht zusammenzusetzen. Im einzelnen besteht diese magnetische Karte aus mindestens einer Oberflächenschicht eines thermoplastischen Kunstharzes und einer magnetischen Schicht, die sich über mindestens einen Teil der Kunstharzschicht erstreckt. Über der magnetischen Schicht befindet sich eine Farbschicht, auf welcher dann wieder eine Musterschicht aufgebracht ist. Auf diese Weise ist die Farbschicht in der Lage, das unschöne Aussehen der Magnetschicht zu verdecken, wobei die Musterschicht dennoch durch das Vorhandensein der Magnetschicht nicht gestört ist, eben weil sich zwischen diesen beiden Schichten die zusätzliche Farbschicht befindet. Auf diese Weise läßt sich das Aussehen einer solchen Karte wesentlich verbessern.

Allgemein ergeben sich bei beschrifteten Karten eine Vielzahl von Nachteilen hinsichtlich der bisher bekannten angewendeten Beschriftungsverfahren, die etwa Druckverfahren, die Verwendung sogenannter Matrixprinter oder auch die Möglichkeit umfassen, ein sogenanntes "hot Stamping Tape" zu verwenden, wobei die Beschriftung gegebenenfalls auch pünktchenweise, ähnlich einem Siebdruckverfahren aufgebracht werden kann. Alle diese Beschriftungsmöglichkeiten haben den Nachteil, daß sie sich im Endeffekt abtragen, also nicht, jedenfalls nicht im geforderten Maße, abriebfest sind, auch dann nicht, wenn schnellantrocknende oder verdunstende Tintenflüssigkeiten o. dgl. verwendet werden.

Die Beschriftung während des Herstellungsvorgangs vorzunehmen ist ungünstig, weil diese von außen an der endgefertigten Karte visuell wahrnehmbar sein soll, so daß eine Beschriftung nur auf der obersten Schicht angebracht werden kann, es sei denn, daß transpartente Deckschichten vorgesehen sind. In diesem Fall müssen aber mittlere Schichten schon die fertige Beschriftung aufweisen, und diese ist zu diesem Zeitpunkt des Zusammenstellens des Kartenlaminats unter Umständen noch nicht verfügbar, weil man nicht weiß, welcher Person diese Karte später zuzuordnen ist. Außerdem müßte dann die Endausfertigung der Ausweis- oder Kreditkarten beim Kartenhersteller erfolgen und nicht, wie aus Vereinfachungs- und Kostengründen erwünscht, beim Ausgeber der Karten. Dabei erfordert die Endfertigung der Karte beim Hersteller auch noch die Überführung sämtlicher Daten der jeweiligen Karteninhaber vom Ausgeber an den Hersteller.

Bei einem weiteren bekannten Verfahren zur Herstellung einer Karte, beispielsweise Identifikationskarte (FR-A-2 435 357) wird auf eine Trägerschicht als Polyvinylchlorid (PVC) eine lichtempfindliche Schicht oder Fotoschicht aufgebracht. Diese Fotoschicht besteht selbst wieder aus einer aufeinanderfolgenden Schichtung einer ersten Polyesterschicht, einer sich an diese anschließenden Ablöseschicht, der eigentlich fotoempfindlichen Schicht, die eine Dicke von lediglich einigen µ aufweist und daher der Fotoemulsion entspricht, einer sich an diese anschließenden Klebschicht und einer unteren, beispielsweise aus einem in bestimmter Weise behandelten Papier bestehenden Schutzschicht. Von wesentlicherer Bedeutung bei diesem bekannten Verfahren ist, daß die Emulsionsschicht nicht belichtet und in ihrer Empfindlichkeit so eingestellt ist, daß eine Belichtung nur mit einer besonders starken und intensiven Lichtquelle erfolgt, während normales Umgebungslicht nur wenig Einfluß hat.

Bei der Herstellung wird so vorgegangen, daß zunächst die untere Schutzschicht abgezogen und die verbleibende Schichtung mit der Filmemulsion auf die PVC-Trägerschicht aufgepreßt wird, auf welcher sie aufgrund der weiter vorn erwähnten Klebschicht haftet. Anschließend wird, erleichert durch die Ablöse-Zwischenschicht zwischen der eigentlichen Emulsion und der ersten Polyesterschicht diese ebenfalls abgezogen und die insoweit vorbereitete Karte mit der unbelichteten und auch nicht mehr abgedeckten Filmemulsion gelangt dann aus einem Magazin zu einer Belichtungsstation, wo die Belichtung unter Einwirkung einer starken ultravioletten Strahlung durchgeführt wird. Es schließen sich dann eine Anzahl von Entwicklungs-, Bürst-, Spül- und Trockungsschritte an, wobei die jeweilige Karte mit Hilfe von reversierbaren Schlitten in die einzelnen Bäder und Behandlungsstationen überführt wird. An einer letzten Station wird dann auf die noch immer freiliegende, jetzt allerdings entwickelte Emulsionsschicht eine Polyesterschutzschicht durch Heißpressung aufgebracht; es ist allerdings nicht auszuschließen, daß sich hier bzw. bei späterem Gebrauch einer solchen Identifikationskarte Schwierigkeiten dadurch ergeben, daß die Verbindung der zuletzt aufgebrachten Polyesterschicht mit dem restlichen Kartenmaterial nicht ausreichend ist, da Polyester, wie bekannt, durch Heißpressung nicht zu einer hinreichenden Haftung gebracht werden kann.

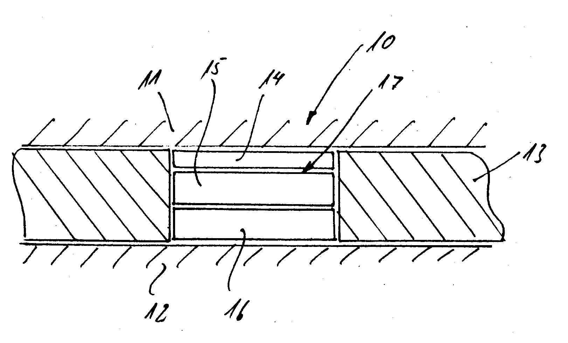

Problematisch ist ferner die Vorbereitung der Karte, bei welcher von der die Emulsionsschicht umfassenden Fotoschicht zunächst zwei Schichten abgezogen werden müssen und bei einem Zwischenschritt die Verklebung mit der PVC-Trägerschicht zu erfolgen hat, alles bei unbelichteter und daher entsprechend empfindlicher Emulsion. Ferner ist nicht auszuschließen, daß der gesamte Belichtungs- und Entwicklungsaufwand, der während der Kartenherstellung getrieben werden muß - erst durch das Aufbringen der letzten Polyesterschicht ist die Identifikationskarte fertig und die Emulsionsschicht abgedeckt - Beschädigungen an der soeben belichteten Emulsionsschicht auftreten können oder diese sich in den einzelnen nen Bädern, Bürst- und Trocknungsstationen ganz oder teilweise ablöst. Der Herstellungsaufwand einer solchen Identifikationskarte ist insgesamt erheblich. Ferner darf bei dieser bekannten Identifikationskarte davon ausgegangen werden, daß eine farbige Gestaltung der durch die ultraviolette Belichtung gewonnenen Abbildung ausgeschlossen ist, denn die Entwicklung eines Farbbildes erfordert eine wesentlich größere Anzahl von Bädern und Zwischenschritten, als bei dieser Art der nachträglichen Belichtung und Entwicklung im Hinblick auf die Stabilität und Haftung der Emulsion noch erträglich ist. Außerdem kann durch eine ausschließlich ultraviolette Belichtung eine für das Normalauge zufriedenstellende Farbzusammenstellung der Abbildung nicht erzielt werden.

Als weiteren Nachteil muß schließlich noch der Umstand angesehen werden, daß sich die nachträgliche Belichtung der Fotoemulsion, nämlich nachdem diese auf den PVC-Träger aufgeklebt ist, nur schlecht und unter Qualitätseinbußen vornehmen läßt, allein schon deshalb, weil die stets notwendige Klebschicht unter praktischen Bedingungen nicht so einwandfrei gleichmäßig aufgebracht werden kann, daß Verfälschungen des Aufnahmevorganges durch diese mit Sicherheit vermeidbar sind.

Ferner ist bei der Herstellung eines kartenförmigen Informationsträgers die Verwendung eines Zwischen- oder Hilfsträgers in Form einer planaren Unterlage bekannt (US-A-4 132 350), dieser Zwischenträger dient jedoch als Zwischenlagerung für den Aufbau verschiedener Schichten bei der Herstellung einer Magnetkarte und wird dann während des Herstellungsprozesses vom Verbund der Kunststoffschichten wieder abgetrennt. Im einzelnen wird dabei so vorgegangen, daß auf die planare Unterlage zunächst eine Kunstharzchutzschicht, dann eine ein Muster aufweisende Schicht, eine Farbschicht und die aus einem magnetischen pulverförmigen Material bestehende Magnetschicht sowie schließlich ein Bindemittel aus einem thermoplastischen Kunstharz aufgebracht wird, so daß man ein erstes Laminat erhält. Anschließend wird die Magnetschicht dieses ersten Laminats mit einem ersten Deckblatt eines thermoplastischen Kunstharzes in Kontakt gebracht, es erfolgt eine Verbindung unter Wärme- und Druckeinwirkung, um das Laminat zu befestigen und anschließend wird die planare Unterlage wieder abgezogen. Bezüge zu vorliegender Erfindung bestehen nicht, da diese planare Unterlage in Form eines Hilfsträgers nicht mit einer fotographischen Emulsion verbunden und auch nicht entsprechend vorbereitet wird; schließlich erfolgt auch keine. Belichtung oder Entwicklung auf dem Hilfsträger.

Allgemein sind kartenförmige Informationsträger bekannt (US-A-3 871 119), die aus mehreren miteinander zu einem Block verbundenen Kunststoffschichten bestehen, von denen mindestens eine ein Bild eines Benutzers der Karte enthaltende fotographische Schicht ist. Hergestellt wird ein solcher kartenförmiger Informationsträger, beispielsweise eine Führerscheinkarte,dadurch, daß man auf eine PVC-Unterlage unter Zwischenfügen eines geeigneten Klebstoffs einen anderweitig entwickelten Film, der für sich gesehen wie bekannt aus dem eigentlichen Filmträger und der das eigentliche Abbild enthaltenden Emulsionsschicht besteht, mittels geheizter Walzen aufbringt und anklebt. Auf diese Weise ergibt sich im Endeffekt, daß die fotographische Schicht in diesem Informationsträger lediglich von einer fertig belichteten, entwickelten, fixierten und getrockneten Emulsion geringerer Dicke gebildet ist, die auf beiden Seiten mit angrenzenden Kunststoffschichten verbunden ist, wobei natürlich die auf der Emulsionsrückseite befindliche Kunststoffschicht die Filmträgerschicht ist, mit der sie von Anfang an schon verbunden gewesen ist. Die Dicke des fotographischen Films, vorzugsweise Farbfilms, der auf diese Weise vorzugsweise beidseitig mit PVC-Trägerschichten verbunden wird, ist in dieser Veröffentlichung zu 9 mils angegeben, was der üblichen Dicke eines fotographischen Films aus Träger und Emulsion von etwa 228 µ entspricht. Die reine Emulsionsschicht ist, wie bekannt, um mindestens eine Größenordnung dünner. Interessant ist bei dieser Veröffentlichung (US-A-3 871 119), daß die Klebstoffprobleme, wenn man Filmschichten mit Kunststoffschichten verbinden will, ausführlich behandelt werden und daher bezieht sich diese Veröffentlichung im wesentlichen auch auf spezielle Klebstoffarten, die beim Aufbau solcher aus Kunststoffschichten bestehender Informationsträger Verwendung finden können.

Ferner ist es allgemein bei der Herstellung von ein fotographisches Abbild des Benutzers oder Trägers aufweisenden Identifikationskarten bekannt, eine mittlere Folie oder Schichtung im Format des einzubringenden Bildausschnittes auszustanzen und anschließend ein fertiges Foto in den ausgestanzten Bereich einzulegen. Anschließend werden beidseitig weitere Schichten und Folien angeordnet und es erfolgt die Verbindung dieser Kunststoffschichten über Klebmittel und/oder Druck- und Wärmeeinwirkung. Dabei muß mindestens dort, wo sich das eingelegte Foto, welches selbst wieder aus einer zusammengesetzten Schichtung aus Träger und Emulsion besteht, befindet, ein zusätzlicher Kleber mit Bezug auf die abdeckende Kunststoffschicht aufgebracht werden, damit eine hinreichende Verbindung an dieser Stelle sichergestellt ist und nicht durch ein- oder zweimaliges Biegen der Identifikationskarte Ablöseerscheinungen und Blasen genau an der Stelle auftreten, wo sich das foto mit der Abbildung des Trägers und/oder sonstigen Informationen und Daten befindet.

Problematisch ist daher bei allen Ausweisen oder Identifikationskarten, die ein Bild oder jedenfalls eine fotographische Schicht enthalten oder aufnehmen der Umstand, daß solche Bilder nur auf einer Materialbasis erhältlich sind, die mit dem Material der Ausweise nicht verbindbar ist. Im Normalfall werden gängige Papierbilder, beispielsweise Polaroidfotos verwendet, wobei das Papierbild an seiner Oberfläche keine Verbindung mit den abdeckenden Kunststoffschichten eingeht; auch wenn man einen Kleber aufbringt, verbindet sich dann lediglich die Fotoemulsion des Papierbildes mit dem Kleber und würde bei einem willkürlichen Öffnen der Identifikationskarte, wie dies zu Fälchungsabsichten nicht ausgeschlossen ist, dann wegreißen; hier ergeben sich Sicherheitsaspekte, die nicht unbeachtet bleiben können; außerdem führen die bekannten Maßnahmen allgemein zu Qualitätseinbußen bei solchen Identifikationskarten, da diese aus verschiedneen Materialien bestehen. Ein Musterbeispiel für die Herstellung solcher Identifikationskarten ist beispielsweise in der US-A-4 101 701 beschrieben, in welcher auch geeignete Kleb- und Haftungsmittel angegeben sind, um die Verbindung der einzelnen Kunststoffschichten mit dem eingelegten Polaroidfoto vornehmen zu können.

Aufgrund dieses bekannten Stands der Technik ergibt sich daher die Problemstellung, wie man Daten und Abbildungen, beispielsweise die Darstellung der Gesichtsform eines Trägers, in einer beliebigen Identifikationskarte ohne größeren Aufwand anbringen kann, wobei insbesondere auch die Fälschungssicherheit im Vordergrund steht.

Identifikationskarten können als persönlicher Ausweis ausgebildet sein, der beispielsweise einer bestimmten Person den Zugang zu einem nicht öffentlichen Areal ermöglicht, oder als unpersönlicher Ausweis, der beispielsweise den jeweiligen Besitzer zum Bezug einer Dienstleistung oder einer Ware berechtigt. Die Ausführung der Karte und die zum Identifizieren des Inhabers verwendeten Mittel können sehr unterschiedlich sein und sich im allgemeinen von der vorgesehenen Verwendung abhängig. Übertragbare Kundenkarten von Kaufhäusern oder Kreditorganisationen bestehen einfacherweise aus einer einzigen Kunststoffschict, auf der der Name des Herausgebers aufgedruckt und der Name des Inhabers sowie eine individuelle Kennzahl eingeprägt sind. Persönliche Ausweise bestehen demgegenüber aus einem Kunststofflaminat mit einer Schicht, auf der für das menschliche Auge sichtbare Informationen im Klartext aufgetragen sein können und die gegebenenfalls, wie schon erwähnt, ein Fenster zum Einlegen einer Fotographie aufweist. Ferner können für das menschliche Auge nicht sichtbare, jedenfalls nicht verständliche kodierte, maschinenlesbare Informationen, etwa für IR-Strahlung, vorgesehen und gegebenenfalls auf einer weiteren Schicht angeordnet sein.

Es versteht sich, daß die Herstellung einer Identifikationskarte umso aufwendiger ist, je mehr Informationen auf der Karte angeordnet sind. Das gilt insbesondere für die Schicht mit den für das menschliche Auge sichtbaren und im Klartext aufgetragenen Informationen, die gewöhnlich den Namen des Ausgebers, die Bezeichnung des Bereichs, in dem die Karte gültig ist, eine oder mehrere Kennzahlen, den Namen und gegebenenfalls auch die Unterschrift des Inhabers sowie dessen Fotografie umfassen. Dabei können nur allgemeine und auf vielen Karten gleichartige Informationen, beispielsweise der Name des Herausgebers oder der Gültigkeitsbereich maschinell aufgebracht werden, während die den Inhaber betreffenden Informationen mehrere unterschiedliche, manuell und einzeln durchzuführende Arbeitsgänge erfordert.

Es ergibt sich daher für die vorliegende Erfindung die Aufgabe, ein Herstellungsverfahren für Karten beliebiger Art, beispieisweise Identifikationskarten, Scheckkarten u. dgl. zu schaffen, welches gegenüber dem bekannten Verfahren erheblich vereinfacht ist, eine hohe Qualität des vorzugsweist farbige Abbildungen und/oder Daten und Informationen enthaltenden Endproduktes sicherstellt und dafür sorgt, daß die Karte auch hinreichend fälschungssicher ist.

### Vorteile der Erfindung

Das erfindungsgemäße Verfahren löst diese Aufgabe mit den kennzeichnenden Merkmalen des Anspruchs 1 und hat den Vorteil, daß Informationen, also Bild und andere Variablen, Daten, die mittels eines Videosystems aufgenommen oder in einem entsprechenden, mit dem Videosystem zusammenarbeitenden Personalcomputer (PC) oder sonstigen Rechner eingegeben worden sind, direkt von einem Videoprinter ausgedruckt werden, und zwar bevorzugt direkt eine der Laminatschichten der Karte und hier wieder bevorzugt direkt auf PVC (Polyvinylchlorid), dem üblichen Kunststoffmaterial für die Herstellung von Karten oder Informationsträgern, obwohl es sich versteht, daß hierfür auch viele andere geeignete Kunststoffe in Frage kommen, z.B. Polyester. Wenn daher im folgenden von PVC als Kunststoffmaterial die Rede ist, kann dieses auch durch ein beliebiges anderes Kunststoffmaterial ersetzt sein - die Bezeichnung PVC steht somit stellvertretend für sonstige Materialien. Besonders vorteilhaft ist dabei der spiegelverkehrte Ausdruck, der dann durch das transparente Kunststoffmaterial der bedruckten Schicht von dessen Rückseite seitenrichtig wahrgenommen werden kann.

Bedruckt man also beispielsweise eine PVC-Folie in dieser Art mit einem Videoprinter und verschweißt die Folie anschließend mit der Grundkartenform, dann erfüllt sich sozusagen der Traum eines Ausweisherstellers, daß nämlich eine der PVC-Laminatschichten des Ausweises gleichzeitig der Datenträger für Bild und sonstige variable Informationen ist, so daß sich das Auftreten von "Fremdkörpern" in der Karte vermeiden läßt.

Der Ausdruck der Daten kann in einer Ausgestaltung auch auf einer besonders dünnen (beispielsweise nur 10 my betragenden) Empfängerschicht als spätere Laminatschicht der Karte erfolgen, die auch als Receiver-/Releaseschicht bezeichnet werden kann. Eine solche Schicht ist dann üblicherweise auf einem Verarbeitungsträger (beispielsweise Papier mit einer Dicke von ebenfalls beispielsweise ca. 0,2 mm) aufgebracht, der später wieder abgezogen wird.

Dabei ist ferner vorteilhaft, daß der Ausdruck durch den Videoprinter auf einer später äußeren Schicht der fertigen Karte erfolgt.

Es soll nicht verkannt werden, daß der direkte Druck auf eine PVC-Schicht schwierig sein kann, daher besteht eine Ausgestaltung darin, die zu bedruckende (PVC)Schicht mittels einer Receiver-Beschichtung vorzubereiten, z. B. in dem zu bedruckenden Bereich mittels bekannter geeigneter Druckverfahren, beispielsweise Siebdruck oder Offseitdruck diese zusätzliche Receiver-Beschichtung aufzubringen, die ihrerseits als von dem Videoprinter zu bedruckende Zwischenunterlage dient.

Wird demgegenüber wie weiter vorn schon erwähnt eine auf einem weiteren Verarbeitungsträger aufgebrachte dünne Receiverschicht für das Aufdrucken verwendet, dann wird diese Receiverschicht von dem Bearbeitungsträger (Papier) später wieder abgezogen und nur die dünne PVC/Receiverschicht in die Karte integriert.

Erfolgt die Vorbereitung der PVC-Schicht für das Videoprintverfahren durch Aufbringen einer Empfänger-Beschichtung, die ebenfalls aufgedruckt wird, wie erwähnt mittels Siebdruck oder Offseitdruck, dann kann diese Empfänger- oder Receiver-Beschichtung im zu bedruckenden Bereich (durch Siebdruck oder Offsetdruck oder durch andere Verfahren) erfolgen; die Erfindung umfaßt aber auch die Möglichkeit, hier nicht insofern partiell zu beschichten, sondern bei Auswahl eines geeigneten, auch eine Verschweißung in den Randbereichen problemlos ermöglichenden Receiver-Zwischenbeschichtung diese Zwischenbeschichtung großflächig aufzubringen, was den Verzicht auf entsprechende Maskenformen ermöglicht und, - gegebenenfalls auch auf größeren Bögen - vollflächig zunächst diese Receiverbeschichtung aufzubringen und dann mit dem Videoprinter die Daten auszudrucken, vorausgesetzt, daß diese Receiverbeschichtung eine einwandfreie Verbindung und Verschweißung der zu bedruckenden(PVC)Folie oder sonstige Kunststoffschicht mit den die Karte bildenden restlichen PVC-Schichten ermöglicht.

Schließlich besteht eine bevorzugte letzte Ausführungsform vorliegender Erfindung darin, daß auf eine bereits auf Endmaß gestanzte, also insofern fertige Karte (beispielsweise DIN-Karte, Kreditkarte u. dgl.) Bild und Text als eine Art "Unterlaminat" verschweißt werden, indem die transparente, dünne (PVC)Folie, auf die spiegelverkehrt das Layout von einem Videoprinter ausgedruckt ist, ebenfalls das Kartenendmaß schon aufweist. Die bedruckte PVC-Folie wird dann umgekehrt auf die gestanzte Karte aufgelegt und alles zusammen verschweißt. Die "Beschriftung" befindet sich auch hier im Inneren zwischen den beiden schichten, wobei die dünne PVC-Folie mit der spiegelverkehrten Videoprinter-Beschriftung mit ihrer Rückseite gleichzeitig die schützende Deckfolie der Karte bildet.

Hierdurch ergibt sich grundsätzlich der doppelte Vorteil, daß diese spiegelverkehrt bedruckte Folie einerseits gleichzeitig Datenträger und andererseits gleichzeitig schützende Deckfolie ist, so daß diese beiden Elemente, da sie einstückig von einem einheitlichen Folienstreifen gebildet sind, bei hierdurch bewirkter erhöhter Fälschungssicherheit gar nicht mehr getrennt werden können.

Schließlich ist es möglich, die dünne, z.B. ein aufgedrucktes Photo tragende PVC-Folie mit kleineren Abmessungen, z.B. nur mit den Abmessungen des Photos normal oder spiegelbildlich aufzuschweißen. Da sie so dünn ist, trägt sie randseitig nicht auf, zumal man die Heißpreßplatte mit entsprechend verringerten Abmessungen, die z.B. schon vorhandene Rliefdaten der Karte freiläßt, mit einem Linienmuster versehen kann.

### Zeichnung

Die Zeichnung zeigt schematisiert im Querschnitt eine Schweißform mit eingelegten Kartenbestandteilen und Druckausgleichsschicht zur Kartenherstellung einer Karte mit Unterlaminat von Bild und Daten als eine mögliche Lösungsvariante der Erfindung.

### Beschreibung der Ausführungsbeispiele

Der Grundgedanke besteht darin, auf eine Datenträgerschicht die für eine Karte erforderlichen Daten, Informationen, Abbildungen, Fingerabdrücke u. dgl. mit Hilfe eines Videoprinter-Druckverfahrens aufzubringen, wobei direkt auf das Kunststoffmaterial der Kartenschicht spiegelverkehrt gedruckt wird.

Hierzu kann auch so vorgegangen werden, daß neben dem unmittelbaren Ausdruck auf eine an der Laminatbildung der Karte beteiligte (PVC)Schicht dann, wenn sich für den direkten Videoprinter-Druck Schwierigkeiten ergeben, zunächst eine Zwischenbeschichtung gewählt wird, die etwa nach Art eines "Lacks" partiell oder vollflächig auf die PVC-Schicht aufgebracht wird, und zwar hier wiederum mit besonderem Vorteil mittels eines Druckverfahrens (Siebdruck oder Offsetdruck o. dgl.). Die vollständige Beschichtung, auch bei größeren PVC-Bögen mit einer solchen Zwischen-Empfängerdruckschicht erfolgt dann, wenn diese Empfängerschicht ein Verschweißen der beteiligten PVC-Laminate möglich macht bzw. dem durch Wärmeeinwirkung bewirkten Verschweißungsvorgang sogar förderlich ist.

Alternativ kann auf eine Kunststoffschicht als Receiver-Releaseschicht mit dem Videoprinter ausgedruckt werden, die sich mit restlichen (PVC)Laminatschichten problemlos verbindet, also vorzugsweise ebenfalls aus PVC besteht, aber selbst auf einen Verarbeitungsträger aufgebracht ist, von dem sie dann wieder beim Verschweißen abgezogen wird.

Dabei erfolgt der Ausdruck auf die Kunststoffschicht, vorzugsweise PVC-Schicht in spiegelverkehrter Form, so daß diese Schicht dann unmittelbar eine der Laminatschichten der Karte bildet, transparent ausgebildet ist und umgekehrt mit der in ihren Abmessungen gegebenenfalls auch schon fertigen Karte verbunden wird.

Videoprinter-Druckverfahren sind für sich gesehen bekannt; sie können auch in vorteilhafter Weise in Farbe durchgeführt werden, wobei solche Druckverfahren, je nach Hersteller auch als sogenannte "Heiß-Transfer-Sublimierung" oder als "Thermal-Transfer-Dye-Diffusion" bezeichnet werden, die hier auch für die Erfindung bevorzugt eingesetzt werden.

Die jeweils verfügbaren Videoprinter-Drucksysteme arbeiten gegebenenfalls mit speziellen, für das jeweilige System entwickelten Materialien, beispielsweise Farbbänder und spezielles Aufnahmepapier, wobei die Qualität je nach verwendetem Videoprinter und Druckverfahren mit Bezug auf die Aufbringung von Daten, aber auch Bildern u. dgl. hervorragend ist.

Es wird dann so vorgegangen, daß die gewünschten Daten beispielsweise mittels eines Videosystems (Videokamera mit zugeordnetem Bild/Textspeicher) aufgenommen oder in einen Personalcomputer (PC) oder einen sonstigen Rechner eingegeben werden, der mit einem Videoprinter zusammenarbeitet, wobei letzterer dann die Daten entsprechend der weiter vorn erwähnten Möglichkeiten ausdruckt.

Die Erfindung beruht insofern auf der Erkenntnis, anstelle irgendeines Papierausdrucks, der selbst wiederum nur eine Alternative zu dem möglichen Einlegen beispielsweise von Polaroid-Fotos oder sonstigen Angaben in das Kartenlaminat wäre, Daten direkt auf eine der Kunststofflaminatschichten, bevorzugt PVC-Folie mit Videoprinter zu drucken.

Dabei kann dem Videoprint-Verfahren vorlaufend auf die Kunststoffschicht, bevorzugt PVC-Schicht ein partielles oder komplettes Beschichtungsmittel als "Empfängerbeschichtung" aufgebracht, und zwar vorzugsweise aufgedruckt werden, beispielsweise mittels Siebdruck oder Offsetdruck, indem man einen geeigneten Lack oder ein sonstiges Mittel aufbringt. Auf diese Empfänger(zwischen)beschichtung erfolgt dann das Ausdrucken der Daten mit dem Videoprinter. Ein partielles Aufbringen der Empfängerschicht nur im zu bedruckenden Bereich unter Freilassen der Randbereiche empfiehlt sich dann, wenn diese Empfängerschicht ein Verschweißen der beteiligten PVC-Laminatschichten erschwert. Läßt man daher die Randbereiche frei, ist dort ein einwandfreies Verbinden möglich.

Ein komplettes Aufbringen oder Aufdrucken der Empfängerbeschichtung für die Videoprinter-Daten kann dann vorgenommen werden, wenn diese sich mit PVC gut verbindet und das Verschweißen der den Kartenaufdruck bildenden PVC-Laminatschichten erlaubt bzw. begünstigt.

Es kann auch auf eine dünne Receiver-/Releaseschicht mittels Videoprinter ausgedruckt werden. Die Dicke der Schicht kann beispielsweise 10 my betragen. Sie ist auf einem Verarbeitungsträger, etwa aus Papier mit wesentlich größerer Dicke aufgebracht und besteht bevorzugt aus PVC. Bei der weiteren Verarbeitung wird dann der Verarbeitungsträger von der dünnen, den Ausdruck tragenden Receiver-/Releaseschicht später wieder abgezogen und diese mit den Grundkartenlaminat-Schichten verschweißt, verbunden, beispielsweise auch verklebt. Dabei kann dann, wenn die Receiver-/Releaseschicht eine PVC-Schicht ist, auch auf dieser noch eine Empfängerbeschichtung aufgedruckt sein, um die Datenaufnahme durch den Videoprinter zu verbessern. Dabei erfolgt der Druck stets spiegelverkehrt mit den Videoprinter-Druckdaten. Anschließend wird die transparente Folie mit der bedruckten Fläche auf die Laminatgrundschichten aufgelegt/aufgeklebt/aufgeschweißt, und der Verarbeitungsträger wird abgezogen.

Hiermit vergleichbar ist die Möglichkeit, eine auf Endmaß gestanzte fertige Karte dadurch mit einem Bild- und Text-Unterlaminat zu versehen, indem man auf die transparente, dünne PVC-Folie spiegelverkehrt mittels Videoprinter die Daten ausdruckt, wobei diese PVC-Folie schon das fertige Endmaß aufweist. Anschließend wird dann die fertige Grundkarte mit der umgekehrt daraufgelegten bedruckten PVC-Folie zusammen verbunden, so, wie dies die folgende Erläuterung in Verbindung mit der Zeichnung angibt, wobei, wie es sich versteht, dies nur eine, wenn auch die bevorzugte Möglichkeit darstellt, durch unmittelbares Bedrucken von PVC-Schichten Karten herzustellen. Die PVC-Folie hat dann ein beliebiges Innenmaß oder Fertigkarten-Endmaß.

In der Zeichnung ist schematisiert die Form 10 zur Verschweißung des Kartenaufbaus dargestellt; sie umfaßt eine obere Heizplatte 11, eine untere Heizplatte 12, die eigentliche, an die Randkanten des eingelegten Kartenlaminats seitlich anliegenden, Endmaß aufweisenden Formteile 13 sowie die bedruckte (PVC)Folie 14, die Grundkarte 15 und ein Druckausgleichelement 16 vorzugsweise in Form einer Gummifolie. Hier kann auch eine flexible Stahlplatte verwendet werden, um einen absolut gleichmäßigen Druck beim Verschweißen zu erzeugen.

Auf die dünne (PVC)Folie 14 ist also, um das Herstellungsverfahren nochmals zusammenzufassen, spiegelverkehrt unmittelbar der Datensatz (Bild, Variable) aufgebracht, beispielsweise mittels Videoprinter in hervorragender Farbqualität aufgedruckt, evtl. nach Vorbereitung durch Sieb- oder Offsetdruck (Zwischenbeschichtung); durch das umgekehrte Auflegen der bedruckten PVC-Folie 14 befinden sich dann die Daten im Bereich 17 der Karte, also zwischen der PVC-Folie 14 und der Grundkarte 15, wobei die (PVC)Folie 14 gleichzeitig die Deckplatte bildet. Auch die Grundkarte 15 ist aus PVC-Material, so daß die Verschweißung zu einem dann einstückigen Laminat problemlos möglich ist.

Eine bevorzugte Ausführungsform verwendet unmittelbar eine auf Endmaß gestanzte DIN-Karte, beispielsweise Kreditkarte u. dgl., also eine insofern fertige Karte, wobei dann Bild und Text als Unterlaminat verschweißt sind und der umgekehrte Bildträger auch hier gleichzeitig die schützende Deckschicht bildet. Die Dicke der (PVC)Folie kann dabei 0,1 mm und die Dicke der Grundkarte, die mit der PVC-Folie zusammenverschweißt dann die endgültig fertige Karte bildet, etwa 0,7 mm betragen; diese Angaben sind fakultativ und schränken die Erfindung nicht ein.

Hier ist es auch möglich, innerhalb des Kartenmaßes nur teilweise zu heizen und zu pressen, z.B. mit Heizstempeln kleinerer Abmessungen zu arbeiten. Dies ist vorteilhaft bei bedruckten (PVC)Folien mit kleineren Außenmaßen wie die Karte, etwa wenn es sich nur um eine ein Bild tragende Folie handelt. Beim Verschweißen wird dann nur in diesem Teilbereich der Karte gearbeitet (also partiell) und dort, wo eventuell schon Reliefbeschriftung vorhanden ist, sind Aussparungen oder Gummistempel in der Schweißform angeordnet. Man kann beim Heißpressen von "Photo-PVC-Folienausschnitten" auch eine Linienmusterung des Stempels verwenden, so daß Randbereiche der Teilfolie völlig unmerklich übergehen und in diesem Linienjuster sozusagen "untergehen".

Erfolgt der Videoprinter-Ausdruck auf eine dünne sogenannte Receiver/Release-Schicht mit einer Dicke von beispielsweise nur 10 µ, dann ist diese selbst wieder auf einen Verarbeitungsträger (Papier; 0,2 mm dick) aufgebracht. Man kann dann nach entsprechendem Aufbringen der dünnen Receiver-, also Aufnahmeschicht mit den aufgedruckten Daten den Verarbeitungsträger von der Schicht wieder abziehen, die dann in entsprechender Weise auf der Grundkarte haftet und mit dieser ebenfalls verschweißt ist. Im letzteren Fall der dünnen Receiver-Schicht kann diese auch mit der Grundkarte verklebt werden. Beiden Ausführungsformen ist das vorteilhafte, spiegelverkehrte Aufdruckverfahren mittels eines Videoprinters in Farbe gemeinsam.

Diese Schichten sind mit der Grundkarte unlösbar verbunden, wobei sie gleichzeitig den Datenträger und die Abdeckschicht bilden. Es versteht sich dabei, daß sich die auf die jeweilige Schicht aufgedruckten Daten, Mitteilungen und Bilder dann zwischen den Schichten, also zwischen den einander zugewandten Flächen der Grundkarte und der auf diese aufgebrachten PVC-Schicht oder Receiver-Schicht befinden und damit auch vollkommen fälschungssicher sind.

Eine vorteilhafte Ausgestaltung besteht schließlich noch darin, daß der Videoprinter in seinen Eigenschaften so ausgebildet ist, daß er selbst die erforderliche Zwischen- oder Receiverbeschichtung aufbringt, also z.B. als zusätzliche "Farbschicht" sozusagen entweder enthält oder in einen separaten zusätzlichen Durchlauf aufbringt. Diese Videoprinter-Haftungs/Übertragungsschicht kann sehr dünn, gegebenenfalls transparent sein und nur dort aufgebracht werden, wo vom Videoprinter Daten und/oder Abbildungen (Photos) auf die Karte gedruckt werden.

## Patentansprüche

1. Verfahren zum Aufbringen und vorzugsweise zum gleichzeitigen Versiegeln von Informationen, Daten, Abbildungen u.dgl. auf kartenförmigen Informationsträgern, Identifikationskarten, Kreditkarten, Ausweiskarten u. dgl., insbesondere aus Vollkunststoffmaterial (PVC) bestehende Karten, bei denen die einzelnen Schichten übereinander angeordnet und miteinander verbunden sind (Laminat), dadurch gekennzeichnet, daß mittels eines für sich gesehen bekannten Videoprinters Daten und/oder Abbildungen direkt auf eine der Kunststoff-Laminatschichten aufgedruckt werden, wobei der Videoprinterausdruck spiegelverkehrt auf diese Kunststoffschicht aufgebracht wird und die Verbindung der bedruckten Kunststoffschicht mit den restlichen Laminatschichten oder einer Grundkarte so erfolgt, daß sich die Daten und/oder Abbildungen zwischen den Laminatschichten oder der Grundkarte einerseits und der bedruckten Kunststoffschicht andererseits befinden und durch das transparente Material der bedruckten Kunststoffschicht seitenrichtig erkennbar sind, wobei die Rückseite der bedruckten Kunststoffschicht gleichzeitig eine schützende Deckschicht für die Daten und/oder Abbildungen bildet.

2. Verfahren nach Anspruch 1, dadurch gekennzeichnet, daß die zu bedruckende Kunststoffschicht als dünne Receiver-Release-Schicht ausgebildet ist, die auf einem dickeren Verarbeitungsträger aufgebracht ist.

3. Verfahren nach Anspruch 1 oder 2, dadurch gekennzeichnet, daß der Verarbeitungsträger bei Verbinden der Receiver-Release-Schicht mit den restlichen Laminatschichten bzw. einer Grundkarte abgezogen wird.

4. Verfahren nach einem der Ansprüche 1 bis 3, dadurch gekennzeichnet, daß die Receiver-Release-Schicht als transparente PVC-Folie ausgebildet ist und mit den restlichen Laminatschichten bzw. Grundkarte verschweißt wird.

5. Verfahren nach Anspruch 4, dadurch gekennzeichnet, daß die Grundkarte eine auf Endmaß gestanztefertige (PVC)Karte ist, die mit der umgekehrt auf sie aufgelegten, ebenfalls Endmaß aufweisenden bedruckten dünnen transparenten PVC-Folie verschweißt wird.

6. Verfahren nach Anspruch 4 oder 5, dadurch gekennzeichnet, daß zur Verschweißung der restlichen Laminatschichten bzw. der Grundkarte mit der spiegelverkehrt bedruckten PVC-Folie ein einen Druckausgleich bewirkendes Druckausgleichselement (Gummifolie 16) in die Form eingelegt wird.

7. Verfahren nach einem der Ansprüche 1 bis 6, dadurch gekennzeichnet, daß auf die zu bedruckende Kunststoffschicht (PVC-Folie) vollständig deckend oder lediglich partiell im zu bedruckenden Bereich eine zusätzliche Empfängerzwischenbeschichtung aufgebracht wird, gegebenenfalls als Farbschicht vom Videoprinter selbst.

8. Verfahren nach Anspruch 7, dadurch gekennzeichnet, daß als Empfängerzwischenbeschichtung ein Lack oder eine sonstige mittels Druckverfahren (Siebdruck, Offsetdruck) aufgebrachte Druckschicht verwendet ist, die bei Ausbildung der zu bedruckenden Kunststoffschicht als PVC-Folie die einwandfreie Verbindung zum PVC-Material herstellt und die vom Videoprinter aufgebrachten Daten aufnimmt.

9. Verfahren nach Anspruch 3, dadurch gekennzeichnet, daß die Receiver-Release-Schicht unter Zwischenfügung einer Klebstoffschicht oder eines Klebemittels auf die Grundkarte aufgelegt, mit dieser verbunden und der Verarbeitungsträger anschließend abgezogen wird.

10. Verfahren nach einem der Ansprüche 1 bis 9, dadurch gekennzeichnet, daß die Aufnahme der Daten mittels Videosystem sowie deren Ausdrucke mit nachfolgendem Verschweißen mit der Grundkarte dezentral vorgenommen wird, wobei Grundkarte und zu bedruckende Schichten auf Endmaß gestanzt geliefert werden.

11. Verfahren nach einem der Ansprüche 1 bis 10, dadurch gekennzeichnet, daß die dünne zu bedruckende Kunststoffschicht (PVC-Folie) gegenüber der Grundkarte ein geringeres Innenmaß aufweist und lediglich in diesem Bereich des Innenmaßes eine Heißpressung zum Verschweißen durchgeführt wird, bei Freilassung restlicher Kartenbereiche.

12. Verfahren nach Anspruch 11, dadurch gekennzeichnet, daß die Heißpressung mit einem Linienmuster eines geheizten partiellen Druckstempels erfolgt.

13. Verfahren nach Anspruch 1, dadurch gekennzeichnet, daß der Videoprinter auf die zu bedruckende Kunststoffschicht die Daten und/oder Abbildungen nach dem Heiß-Transfer-Sublimierungsverfahren (Thermal-Transfer-Dye-Diffusion) aufbringt.

14. Nach dem Verfahren nach einem oder mehreren der vorhergehenden Ansprüche 1 bis 13 hergestellte, aus einer Laminatstruktur aus Kunststoffschichten bestehende Karte, dadurch gekennzeichnet, daß eine der Außenschichten der Karte eine transparente Kunststoffschicht (PVC-Folie) ist, auf die Daten und/oder Abbildungen spiegelverkehrt direkt aufgedruckt sind, und die transparente Kunststoffschicht so mit den restlichen Laminatschichten bzw. einer Grundkarte verschweißt ist, daß deren die Daten und/oder Abbildungen tragende Seite innen liegt und die Rückseite eine schützende Deckschicht für die Daten und/oder Abbildungen nach außen bildet.

## Claims

1. A process for applying and preferably simultaneously sealing information, data, images and the like on card-shaped information carriers, identification cards, credit cards, permit cards and the like, in particular cards made from bulk synthetic material (PVC) in which the individual layers are arranged one above the other and are connected to one another (laminate), characterized in that, by means of a video printer known per se, data and/or images are printed directly onto one of the synthetic laminate layers, where the video printer printout is applied in mirror-image form to this synthetic layer and the connection between the printed synthetic layer and the remaining laminate layers or a base card is made such that the data and/or images are located between the laminate layers or the base card on the one hand and the printed synthetic layer on the other hand, and can be seen from the correct side through the transparent material of the printed synthetic layer, where the rear side of the printed synthetic layer simultaneously forms a protective cover layer for the data and/or images.

2. A process according to Claim 1, characterized in that the synthetic layer for printing is constructed as a thin receiver release layer which is applied to a thicker processing carrier.

3. A process according to Claim 1 or 2, characterized in that the processing carrier is stripped off when the receiver release layer is connected to the remaining laminate layers or to a base card.

4. A process according to one of Claims 1 to 3, characterized in that the receiver release layer is constructed as a transparent PVC film and is welded to the remaining laminate layers or base card.

5. A process according to Claim 4, characterized in that the base card is a finished (PVC) card which is punched to its final size and is welded to the printed thin transparent PVC film which is laid thereon in an inverted manner and which also has its final size.

6. A process according to Claim 4 or 5, characterized in that, for welding the remaining laminate layers or the base card to the PVC film which is printed in mirror-image form, a pressure-compensating element (rubber film 16) which brings about pressure compensation is inserted into the mould.

7. A process according to one of Claims 1 to 6, characterized in that an additional receiver intermediate coating is applied to the synthetic layer for printing (PVC film) in a manner completely covering or lying only partially in the zone for printing, where appropriate as a colour layer by the video printer itself.

8. A process according to Claim 7, characterized in that there is used as the receiver intermediate coating a lacquer or another printing layer which is applied by means of printing processes (screen printing, offset printing) and which, when the synthetic layer for printing is constructed as a PVC film, makes the perfect connection with the PVC material and receives the data applied by the video printer.

9. A process according to Claim 3, characterized in that the receiver release layer is laid onto the base card with the interposition of an adhesive layer or an adhesive and is connected to this base card and the processing carrier is then stripped off.

10. A process according to one of Claims 1 to 9, characterized in that the data is received in decentralized manner by means of a video system and printouts thereof with subsequent welding to the base card, where the base card and the layers for printing are supplied punched to their final size.

11. A process according to one of Claims 1 to 10, characterized in that the thin synthetic layer for printing (PVC film) has a smaller internal size than the base card, and a hot pressing for welding is carried out only in this zone having the internal size, leaving remaining card zones free.

12. A process according to Claim 11, characterized in that the hot pressing is carried out using a linear pattern of a heated partial pressure stamp.

13. A process according to Claim 1, characterized in that the video printer applies the data and/or images to the synthetic layer for printing by the hot transfer sublimation process (thermal transfer dye diffusion).

14. A card produced by the process according to one or more of the preceding Claims 1 to 13 and comprising a laminate structure of synthetic layers, characterized in that one of the outer layers of the card is a transparent synthetic layer (PVC film) onto which data and/or images are printed directly in mirror-image form and the transparent synthetic layer is welded to the remaining laminate layers or to a base card such that the side thereof carrying the data and/or images lies on the inside and the rear side forms a protective cover layer for the data and/or images to the outside.

## Revendications

1. Procédé pour appliquer et de préférence sceller simultanément des informations, des données, des images ou analogues sur des supports d'informations en forme de cartes, des cartes d'identité, des cartes de crédit, des passeports ou analogues, notamment des cartes en matière plastique pleine (PVC) dont les différentes couches sont superposées et reliées entre elles en stratifié, caractérisé en ce qu'à l'aide d'une imprimante vidéo connue en soi on imprime directement les données et/ou les images sur l'une des couches du stratifié de matière plastique, l'impression vidéo étant réalisée sur cette couche de matière plastique étant faite par inversion d'image, et la liaison entre la couche de matière plastique imprimée et les autres couches du stratifié ou de la carte de base se faisant en ce que les données et/ou les images se trouvent, d'une part, entre les couches du tratifié ou de la carte de base, et, d'autre part, la couche de matière plastique imprimée et en ce que la matière transparente de la couche de matière plastique imprimée se reconnaît par le bon côté, le côté arrière de la couche de matière plastique imprimée formant en même temps une couche de recouvrement protectrice pour les données et/ou les images.

2. Procédé selon la revendication 1, caractérisé en ce que la couche de matière plastique imprimée est une couche mince Receiver-Release appliquée sur un support de travail plus épais.

3. Procédé selon la revendication 1 ou 2, caractérisé en ce que le support de travail est enlevé lorsqu'on relie la couche Receiver-Release aux autres couches du stratifié ou de la carte de base.

4. Procédé selon l'une des revendications 1 à 3, caractérisé en ce que la couche Receiver-Release est une couche de PVC transparente et est soudée aux autres couches du stratifié ou à la carte de base.

5. Procédé selon la revendication 4, caractérisé en ce que la carte de base est une carte (PVC) estampée, terminée, aux dimensions définitives, et qui est soudée à la mince feuille transparente de PVC qui a reçu une impression renversée, cette feuille étant également découpée aux dimensions définitives.

6. Procédé selon la revendication 4 ou 5, caractérisé en ce que pour souder les autres couches du stratifié ou la carte de base à la feuille de PVC ayant reçu une inversion renversée, on place un élément de compensation de pression (feuille en caoutchouc 16) qui compense la pression dans le moule.

7. Procédé selon l'une des revendications 1 à 6, caractérisé en ce que la couche de matière plastique (feuille PVC) à imprimer est appliquée de manière à recouvrir complètement ou seulement partiellement un revêtement intermédiaire, récepteur, complémentaire, dans la zone à imprimer, le cas échéant comme couche de couleur, directement par l'imprimante vidéo.

8. Procédé selon la revendication 7, caractérisé en ce que le revêtement intermédiaire récepteur est un vernis, ou autre couche d'impression, réalisé par un procédé d'impression (sérigraphie, impression offset) et qui pour une couche de matière plastique à imprimer, constituée par une feuille PVC, réalise la liaison parfaite avec la matière PVC et reçoit les données appliquées par l'imprimante vidéo.

9. Procédé selon la revendication 3, caractérisé en ce que la couche Receiver-Release est appliquée sur la carte de base avec interposition d'une couche de colle ou d'un agent adhésif, pour être reliée à celle-ci puis on enlève le support de travail.

10. Procédé selon l'une des revendications 1 à 9, caractérisé en ce que la réception des données se fait à l'aide d'un système vidéo et leur impression est réalisée de manière décentralisée par rapport au soudage suivant sur la carte de base, cette carte de base et les couches à imprimer étant fournies estampées aux dimensions définitives.

11. Procédé selon l'une des revendications 1 à 10, caractérisé en ce que la mince couche de matière plastique à imprimer (feuille PVC) présente, par rapport à la carte de base, une dimension intérieure plus faible et seulement dans cette zone de la dimension intérieure, on effectue un pressage à chaud pour le soudage, en laissant libre les autres zones de la carte.

12. Procédé selon la revendication 11, caractérisé en ce que le pressage à chaud se fait suivant un modèle de ligne d'un poinçon de presse partiellement chauffé.

13. Procédé selon la revendication 1, caractérisé en ce que l'imprimante vidéo applique, sur la couche de matière plastique à imprimer, les données et/ou les images selon un procédé de sublimation et de transfert à chaud (Thermal-Transfer-Dye-Diffusion).

14. Carte formée d'une structure de stratifié comprenant des couches de matière plastique, réalisée selon le procédé de l'une ou plusieurs des revendications 1 à 13 précédentes, caractérisée en ce que l'une des couches extérieures de la carte est une couche de matière plastique transparente (feuille de PVC) sur laquelle sont imprimées directement les données et/ou les images par une impression renversée en miroir, et la couche de matière plastique transparente est soudée aux autres couches du stratifié ou à une carte de base, le côté portant les données et/ou les images étant situé à l'intérieur et la face arrière formant une couche de recouvrement protectrice vers l'extérieur pour les données et/ou les images.
